# EUROPEAN PATENT APPLICATION

(11) **EP 2 505 239 A1**
(43) Date of publication of application: **03.10.2012**
(21) Application number: 11160444.3
(22) Date of filing: 30.03.2011
(51) Int. Cl.: A63F 13/06, A63F 13/08, A63F 3/00

(54) **A platform for playing variable multi-player games, and a corresponding multi-player game**

(71) Applicant: Cartamundi Turnhout N.V., 2300 Turnhout (BE)
(72) Inventor: Nietvelt, Steven, 2300 Turnhout (BE)
(74) Representative: Plas, Axel Ivo Michel

(57) **Abstract**

A platform suitable for playing variable multi-player games comprises:
- a substrate;
- at least one interface for receiving dedicated game applications;
- a touch display with dimensions adapted to enable plural players to simultaneously view and interact with a displayed game board through finger touch; and
- a processor for monitoring, controlling and guiding progress of a game.

The substrate and touch display are composed of flexible materials and the touch display comprises a tactile layer for sensing dedicated game components that are associated with a dedicated game application.

## Description

### Field of the Invention

The present invention generally relates to a platform for playing board games, more particularly an electronic platform enabling multiple players to play together and have a social experience, e.g. at home or in a pub. The invention thereto concerns a single portable and conveniently storable platform enabling to play various games wherein multiple players interact with a board and game components.

### Background of the Invention

Traditionally, multi-player games like Monopoly, Risk, Trivial Pursuit, etc. involve a dedicated cardboard play mat and dedicated game components like dice, cards, pawns, movers, paper money, a sand clock, etc. People like the social, educational and tactile aspects of these classic multi-player games.

The cardboard play mat and game components of a classic multi-player game are typically packed and sold in a game box that is rather voluminous and consequently occupies excessive storage space in warehouses, retail shops and at home. Every single game requires storage space for a dedicated box. The boxes of different games have different dimensions further complicating efficient storage of various multi-player games. An additional drawback of traditional games is that the cardboard game mat and the game components such as cards are not upgradeable. In other words, different editions or versions of a game must be purchased and stored separately.

The international patent application WO 2006/058204 entitled "Electronic Board Game" discloses a system for variable multi-player games that consists of an electronic game board (18) with sensors distributed in an array (38), a DVD player (12) and DVD media (14) holding commands and audio-visual content for display on a television set (16). In order to enable variable games, the electronic board has different overlays (26) displaying different playing surfaces. The electronic game board interacts with play pieces (34) and finger touch, and wirelessly communicates with the DVD player that controls the game flow on the basis of the commands stored on the DVD media.

Although WO 2006/058204 respects the social, educational and tactile aspects of classic multi-player family games, the system known from WO 2006/058204 is disadvantageous in various aspects. Firstly, the system consists of several parts such as a DVD player, a television set, an electronic board, overlays, etc., as a result of which it is not compact and not portable. The system is also complex in setup: a wireless connection has to be established between the electronic board and the DVD player, the DVD player and television set have to be connected, overlays have to be positioned on the sensor matrix, DVD media have to be inserted, etc. There is a general lack of integration of technology in the system known from WO 2006/058204. Although page 2, lines 17-19 of WO 2006/058204 mention that the electronic board may have displays or video screens, it is for instance not suggested to integrate the play mat, TV display, and game processing into a single portable and storable platform.

In order to enable variable multi-player gaming, several fully virtual game platforms have been described. Examples thereof are the multi-player game space described in United States Patent Application US 2010/0285881 entitled "Touch Gesturing on Multi-Player Game Space" and the multi-player gaming system described in International Patent Application WO 2009/061952 entitled "Intelligent Multiplayer Gaming System with Multi-Touch Display".

In general, these multi-player game platforms are inspired by single player or multi-player game computers: all game components such as dice, cards, etc. are made virtual as a result of which the social and tactile dimension of classic board games has disappeared. This triggers new problems like the fluctuation of the number of players and the physical moving of players during a game, requiring additional intelligence. US 2010/0285881 for instance discloses a touch-based multiplayer game platform with a touch display (906), processor (902) and interface for removable media (904). All game components are virtual and controllable through gesture-based touch input. Individual playing areas (108) with varying size, orientation and position are assigned to the players. WO 2009/061952 describes a similar touch-based multi-player game platform wherein all components are made virtual. In WO 2009/061952, a multi-touch display has been integrated to facilitate various types of game-related or wager-related activities, together with intelligence to automatically recognize and interpret gestures to identify the player who performed a gesture.

An article from Elizabeth Woyke in Forbes, entitled "Multiplayer Games: Next IPad Trend?" suggests that tablet PCs may become a portable platform for multiplayer games that can be played in a pub, living room or even bus. This article was published on 14 December 2010 and can be retrieved from te Internet via the following URL:
http://blogs.forbes.com/elizabethwoyke/2010/12/14/multiplayer-games-next-ipad-trend/

Although the iPad and other tablet PCs are portable and variable games and different editions thereof can be implemented as downloadable and upgradeable Apps, these tablet PCs offer limited visibility and a limited play area to multiple players. Whereas they are an excellent platform for single-player games, they are not suitable for multi-player games. During the game, the tablet PC shall be moved or handed over between the different players as a result of which no authentic multiplayer game experience is enjoyed with players sitting round a single game board. Further, games implemented as Apps virtualize all game components as a result of which the social and tactile dimension of classic family games has disappeared again.

The closest prior art solution is known from United States Patent Application US 2010/0113148 entitled "Multi-Player, Multi-Screens, Electronic Gaming Platform and System". US 2010/0113148 discloses a variable multi-player game platform that combines social interaction with e-game experience. A typical configuration consists of a main game board (102), i.e. a touch sensitive display in hinging case, and individual user terminals (104a, 104b, 104c, 104d) connecting with the main board. The user terminals however are optional. As is indicated by paragraph [0015] of US 2010/0113148, special purpose hardware gadgets like physical dice, game pieces, and a sand clock may communicate wirelessly with the board.

Although paragraph [0092] of US 2010/0113148 suggests that a single board mode exists wherein only the main board is used to display the game layout, the multi-player game platform known from US 2010/0113148 generally relies on multiple screens, i.e. a common touch-screen and individual player screens. Objects are mainly virtual and transferred wirelessly between the display screens, hence depriving the tactile dimension of classic family games. The main board is not flexible/foldable, remains thick and consequently voluminous to store at home or in retail shops. The dedicated hardware components use wireless communication, in other words a technology that involves energy consumption and radiation, and that cannot be made very thin for integration in playing cards.

It is an objective of the present invention to disclose a multi-player, variable game platform that overcomes the various disadvantages of the above described prior art solutions. More particularly, it is an objective to disclose a game platform that enables multiple players to play a variety of games on a single portable and storable device, maintaining the social, educational and tactile experience of classic family board games. The platform provides good visibility and touch-based interaction to several players sitting around a table without handing-over the device, and aims at combining the best of two worlds: the social and educational benefits of classic family games with the characteristics and ability of automated game progress control known from electronic games.

### Summary of the Invention

According to the invention, the above mentioned objectives are realized by a platform suitable for playing variable multi-player games, as defined by claim 1, the platform comprising:
- a substrate;
- at least one interface for receiving dedicated game applications;
- a touch display with dimensions adapted to enable plural players to simultaneously view and interact with a displayed game board through finger touch; and
- a processor for monitoring, controlling and guiding progress of a game,
wherein:
- the substrate and touch display are composed of flexible materials; and
- the touch display further comprises a tactile layer for sensing dedicated game components that are associated with a dedicated game application.

Thus, the invention concerns a flexible, interactive, electronic play mat with tactile and touch-sensitive layer(s), interface for uploading various games, and with board display area whose dimensions are comparable to that of classic multi-player cardboard game mats. This way, the social dimension of sitting around a single game board and simultaneously interacting with it, is maintained. Thanks to the flexible substrate and display, the game platform according to the invention can be rolled up or folded as a result of which it becomes efficiently storable at home or in warehouses and retail stores. A single play mat will replace the cardboard play mat of several games. The players interact with the platform through finger touch and dedicated game components interact with the platform through the tactile layer that senses and recognizes the game components that are associated with a particular game application. These applications may be uploaded from a memory card if a card interface is available or may be uploaded wirelessly from a computer or network, e.g. over a WiFi interface. The game applications are upgradable. A game application shall contain the visuals to be displayed, like the game board layout, information and animations in full colour, etc. The game application further contains the software logic enabling the processor to monitor, guide and control the game. As mentioned here above, a game application shall have associated game components including dice, movers, cards, etc. that are automatically recognized by the game platform once the associated game application is uploaded. Thanks to these game components, the tactile experience known from family games where dices have to be thrown, cards have to be handed-over between players, pawns have to be moved along the play mat, etc. is maintained. The players handle and move components in a very traditional fashion while the game board controls progress of the game and facilitates monitoring, guidance and interaction with the players.

Optionally, as defined by claim 2, the display comprises printed OLEDs.

Printed OLEDs are thin, flexible and foldable and consequently enable to efficiently mass-produce a thin, flexible game platform that maintains the dimensions of a class cardboard play mat.

Alternatively, as defined by claim 3, the display comprises electronic ink.

Indeed, using e-ink or electronic ink also enables to generate a large-size display that is thin, flexible and foldable. E-ink may even be preferred for low cost mass production.

As is further indicated by claim 4, the platform preferably has a length of and/or a width of at least 40 cm.

As opposed to tablet PCs, a play mat with dimensions of at least 40 cm by 40 cm can be placed in the middle of a table, providing a good overview of the board to at least four players sitting around the table.

As is indicated by claim 5, the platform according to the current invention preferably even has a length and/or a width of at least 50 cm.

A play mat with dimensions of at least 50 cm by 50 cm provides an even better overview and/or allows more than 4 players to comfortably sit around a table and simultaneously take part in a multi-player board game.

According to a further optional aspect, defined by claim 6, the platform may be foldable along folding lines and/or cutting lines.

This way, the platform according to the invention can be stored in a way that is very similar to classic cardboard games. The place mat is folded in order to become compact and fit in a drawer or on a shelf of a cabinet. Just like classic cardboard games that are quarterly folded, the play mat according to the present invention may be folded along a folding line over the entire length of the play mat, and a cutting line over half the width of the play mat.

Preferably, as is indicated by claim 7, the platform according to the invention is quarterly foldable along two folding lines.

Just like most of the cardboard placemats, the folded platform will occupy a space of 20 cm by 20 cm (if the platform's dimensions are 40 cm by 40 cm) or 25 cm by 25 cm (if the platform's dimensions are 50 cm by 50 cm) when quarterly folded.

Alternatively, as is indicated by claim 8, three folding lines and a cutting line may be foreseen to ease quarterly folding of a play mat that has a thickness of a few millimeters..

As is further specified by claim 9, the tactile layer for sensing dedicated game components in the platform according to the current invention may comprise capacitive sensors adapted to sense electrically conductive elements in said dedicated game components.

Indeed, a capacitive sensor layer in the platform and electrically conductive elements in the game components can be made thin and flexible thus enabling roll-up or folding of the platform. Moreover, the technology is reliable, cheap and suitable for mass-production. The electrical conductive elements can be integrated in game components through printing technology. The capacitive sensors in the platform are able to sense changes in conductance resulting from a game component being placed on or moved near the platform. If the conductive elements in the game components form a unique pattern, the associated game application wherein the game component is used, shall enable the game platform's processor to recognize the game component.

Also optionally, as defined by claim 10, the substrate in the platform according to the current invention may comprise a Polyethylene Terephtalate or PET layer.

A PET substrate is thin and flexible, thus enabling to realize a thin, flexible game platform that can be rolled-up or folded for compact storage.

Alternatively, as is indicated by claim 11, the substrate can be made out of cardboard.

According to a further aspect of the platform according to the present invention, defined by claim 12, the processor is configured to be responsive to instructions of a dedicated game application, and adapted to:
- control display of a game board, visuals and game evolution as defined by the dedicated game application; and
- monitor, control and guide progress of a game through interaction with the dedicated game components associated with the dedicated game application and finger touch.

Thus, a game application and associated game components for the platform according to the present invention will typically be made available as a package to customers. The game application shall contain at least the visuals to display the game board layout and the software instructions that enable the processor in the platform to monitor, control and guide progress of the game. Once the game application is installed on the platform, the platform shall be able to detect and recognize the associated game components for that particular game application. Positioning or moving the game components on or over the platform, and/or finger touch by the players will be used to interact with the game application.

Further optionally, as defined by claim 13, the at least one interface of the platform according to the current invention may comprise a wireless interface.

This way, the game applications may be uploaded to the game platform from a computer or network equipment with wireless network interface. The wireless network interface may be a WiFi interface, Bluetooth interface, Zigbee interface, GSM interface, GPRS interface, UMTS interface, etc.

Further optionally, as defined by claim 14, the platform according to the current invention may comprise a Solid State Drive or SSD for storing the dedicated game applications.

Indeed, a game application that is uploaded to the platform via a wireless interface may be stored on a Solid State Drive integrated in the platform. Obviously, other types of RAM may be used in the platform to store uploaded game applications.

Alternatively or additionally, as defined by claim 15, the at least one interface of the platform according to the current invention may comprise one or more of the following:
- an interface for flash memory cards;
- an interface for minidisc;
- a Universal Serial Bus or USB interface.

Thus, as an alternative to or in addition to a wireless interface, the platform according to the invention may be equipped with an interface for flash memory cards that contain the game applications. These memory cards may be SD (Secure Digital) cards, miniSD, MS (Memory Stick) cards, MMCs (MultiMediaCard), xD-Picture Cards, CompactFlash cards, etc., or a combination thereof.

In addition to a platform as defined by claim 1, the current invention relates to a game for such platform as defined by claim 16, the game comprising a dedicated game application readable from memory or downloadable, and one or more dedicated game components comprising one or more of the following:
- cards;
- pawns;
- dice;
- movers;
- tokens;
- figurines.

As will be appreciated by any person skilled in the art of game development, this list is non-exhaustive.

Further optionally, as defined by claim 17, the one or more dedicated game components may comprise printed electrically conductive elements for identification.

This way, the tactile layer of the platform can sense and recognize the dedicated game components and all game components, like cards, can be kept thin and flexible while being mass-manufactured at low cost and with low complexity.

As indicated by claim 18 and claim 19, the printed technology may comprise electrically conductive ink or alternatively may comprise a metal film.

Indeed, one example of printable, electrically conductive technology that can be used the game components according to the present invention consists of using conductive ink. With such conductive ink, a unique pattern may be printed on the game components allowing them to be recognized when the appropriate associated game application is installed on the game platform. Another example of printable, electrically conductive technology consists of metal films.

### Brief Description of the Drawings

Fig. 1 illustrates an embodiment of the multi-player game platform according to the present invention;

Fig. 2 illustrates playing variable multi-player games on an embodiment of the multi-player game platform according to the present invention;

Fig. 3 illustrates various dedicated game components that interact with an embodiment of the multi-player game platform according to the present invention;

Fig. 4 illustrates various carriers of dedicated game applications for use in an embodiment of the multi-player game platform according to the present invention;

Fig. 5 illustrates the layered technology of an embodiment of the multi-player game platform according to the present invention;

Fig. 6 illustrates the flexible nature of an embodiment of the multi-player game platform according to the present invention;

Fig. 7 illustrates the folding of an embodiment of the multi-player game platform according to the present invention; and

Fig. 8 illustrates the process of playing multi-player games on an embodiment of the multi-player game platform according to the present invention.

### Detailed Description of Embodiment(s)

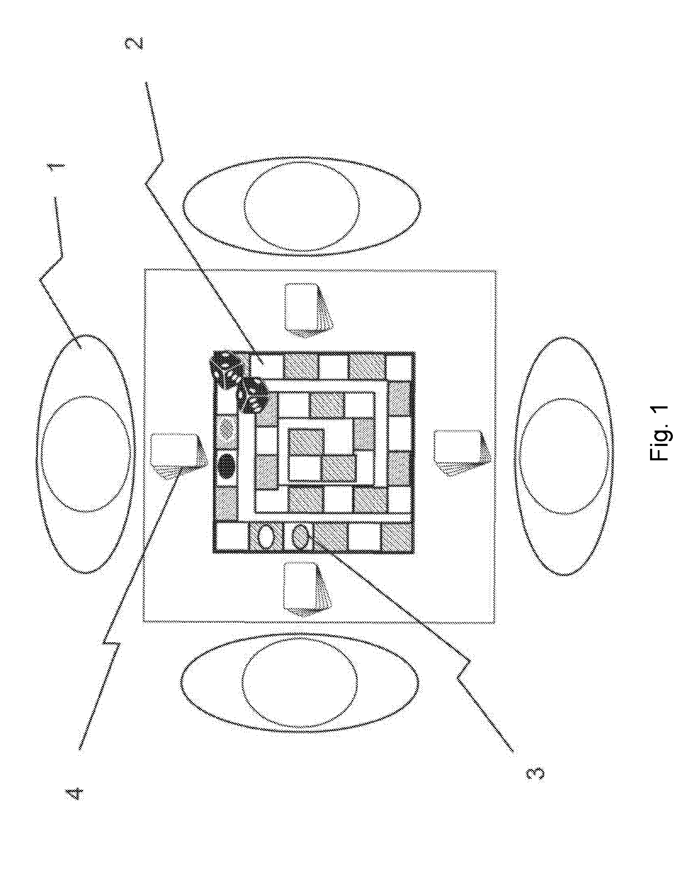

Fig. 1 shows four players 1 comfortably sitting around a table. The four players 1 are playing a multi-player board game on an electronic platform 2 with size of 50 cm by 50 cm that is unfolded and placed centrally on the table in order to provide each player 1 excellent visibility on the play board without having to move or hand over the electronic platform 2. The electronic platform 2 displays the game board layout and acts as an interactive user interface. The players 1 interact with the platform 2 through finger touch and by moving real pawns 3, cards 4 and dice that are automatically sensed and recognized by the electronic play board 2.

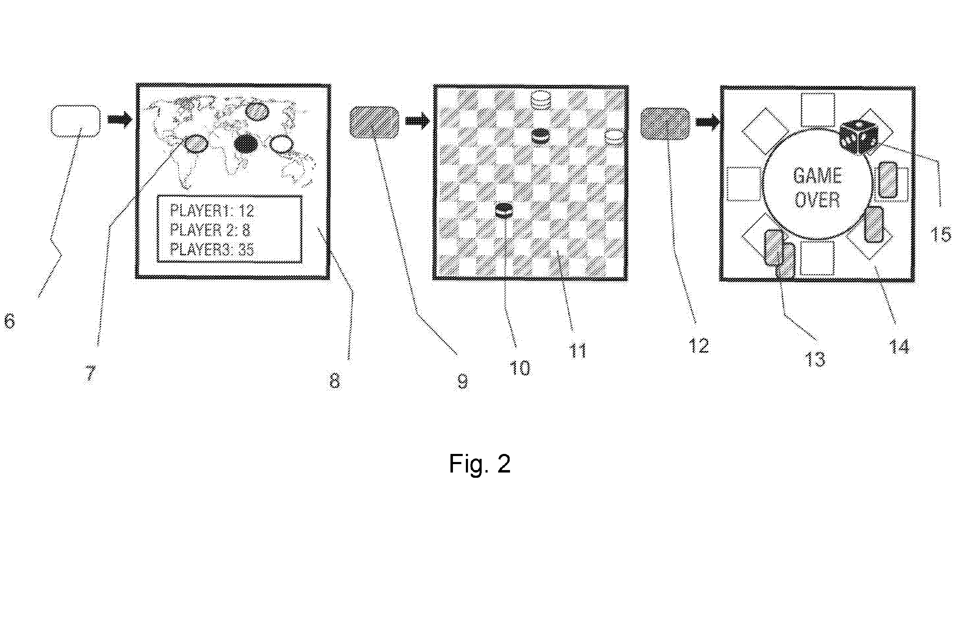

Fig. 2 shows variable games that are played at different points in time on the electronic platform 2 of Fig. 1, depending on the game application that is uploaded. In Fig. 2, insertion of a first SD card 6 turns the platform 2 into an interactive Risk game board that displays the Risk game board layout 8 and that interacts with dedicated game components such as movers 7. These movers 7 are associated with the Risk game application on SD card 6 as a result of which they are only sensed, recognized and able to influence game progress when SD card 6 is inserted in platform 2 and the Risk game application has been uploaded in platform 2 and launched. Insertion of a second SD card 9 turns platform 2 into an interactive checkers game board that displays a checkers game board layout 11 and that interacts with dedicated game components such as movers 10. Again, the game components 10 are associated with the checkers game application on SD card 9 as a result of which these movers 10 shall only be sensed, recognized and able to influence game progress on platform 2 when SD card 9 holding the checkers application is inserted and the checkers application is uploaded and launched. Fig. 2 further shows a third point in time whereon game platform 2 has been turned into a card game through insertion of a third SD card 12 holding the card game application. A card game board layout 14 is displayed and the platform 2 is enabled to interact with dedicated game components such as cards 13 and dice 15 that are associated with the card game application on SD card 12.

As is illustrated by Fig. 2, the platform 2 replaces several multi-player game boards through a single, electronic, changeable play board. The electronic play mat 2 has dimensions comparable to that of a traditional cardboard play mat for a multiplayer game, but acts interactively with finger touch through touch screen technology and to recognition and movement of dedicated game components through a capacitive sensing layer.

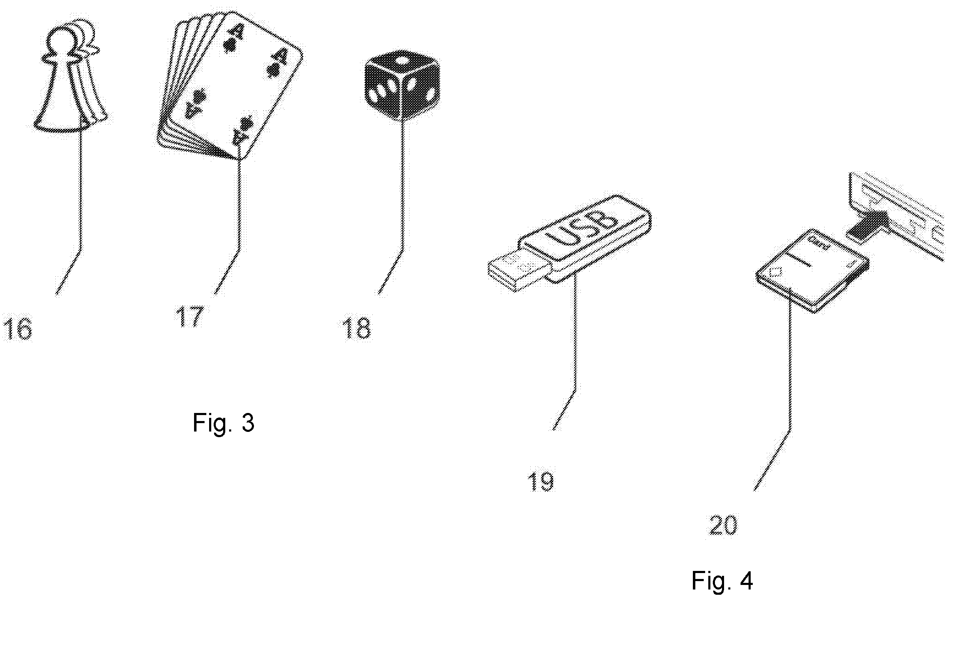

Fig. 3 depicts a set of dedicated game components that are associated with a particular game application. The game application and the game components together constitute a game for game platform 2. The game application is sold together with the game components. The game application thereto may be stored on a memory card that can be plugged into a memory card slot of the platform 2, or may be downloaded from a server, e.g. through a security code or password that is delivered together with the game components. The set of game components shown in Fig. 3 consists of pawns 16, cards 17 and dice 18. These components are made recognizable by the platform 2 through printed technology, e.g. unique codes in electrically conductive ink or a metal film that are printed on or incorporated in the game components 16, 17 and 18.

The game components can be recognized by platform 2 as soon as the corresponding game application is loaded into the platform 2. As is shown in Fig. 4, the game application may be uploaded from RAM memory like USB stick 19, from memory cards like SD card 20, or may be downloaded over a wired or wireless network when the platform 2 is equipped with network interface(s).

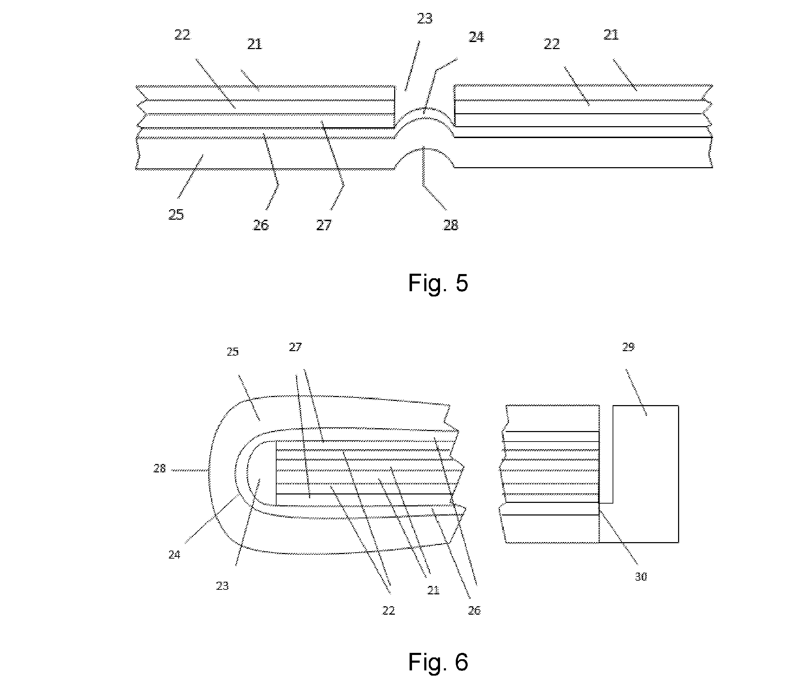

Fig. 5 and Fig. 6 illustrate the layered structure of game platform 2 respectively in unfolded and folded state. The game platform 2 contains a protective layer 21 made out of coated plastic or glass, a touch-sensitive layer 22 made out of capacitive sensors, and a display layer 27 holding e-ink. The touch sensitive layer 22 and display layer 27 may each consist of several sub-layers. Underneath, a connectivity layer 26 and substrate layer 25 are provided. The connectivity layer 26 contains wired and/or printed circuit connectivity towards the controller and vertical connectivity towards the electronics in the display layer 27 and touch sensitive layer 22. The substrate layer 25 is made out of flexible material such as PET or cardboard. In the connectivity layer 26 and the substrate layer 25, deformations 24 and 28 are foreseen in the respective flexible materials in order to create one or more folding lines 23. The protective layer 21, touch sensitive layer 22 and display layer 27 are interrupted at or near folding line 23.

Fig. 6 further shows a module 29 aside the layered play mat that contains the controller, memory card slots and/or network interfaces, a battery, a power plug, and an on/off button. The controller in module 29 is electrically connected with the connectivity layer 26 through connection 30. In folded state, module 29 shall typically have the same or substantially the same height as the combined folded layers, such that the entire platform becomes conveniently storable, as well at home as in retail shops where multiple of those platforms are stacked.

In variant embodiments, the display layer may contain OLEDs instead of e-ink, the display layer may be uninterrupted near the folding lines 23, one or more cutting lines may be provided in order to ease folding and storing the play mat, or no folding lines may be provided in case the play mat is rolled-up for storage.

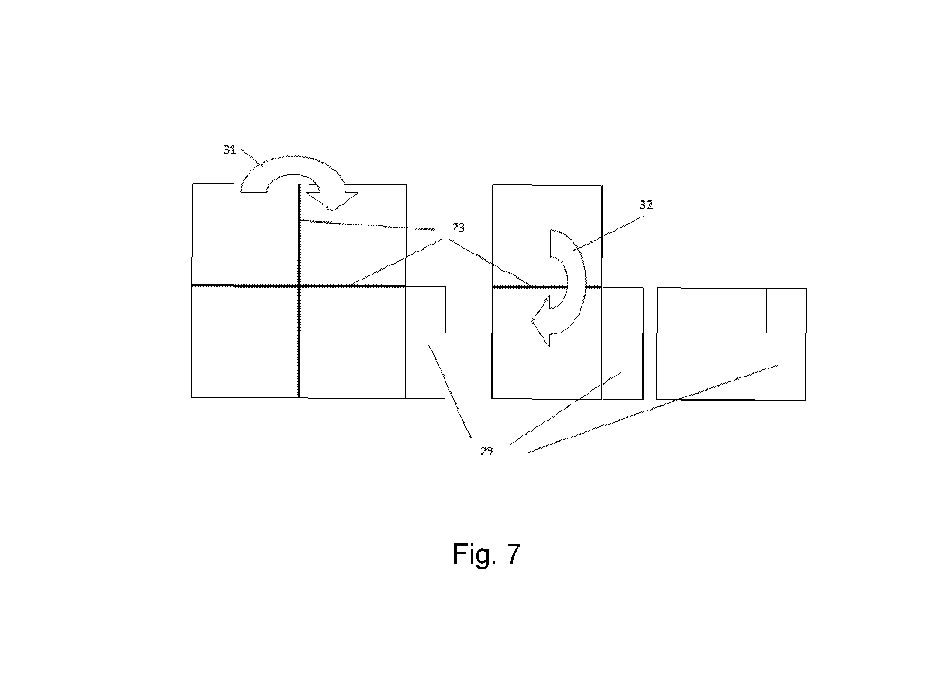

Fig. 7 illustrates the folding process of platform 2. Just like a traditional cardboard game, the game mat is foldable along a folding line 23 to reduce its surface by a factor 2. This is indicated by arrow 31 in Fig. 7. The game mat is further foldable along a second folding line to reduce its surface by another factor 2, as is indicated by arrow 32. Module 29, which typically has a length of half the game mat width or length, is not foldable. As a result, a 50 cm by 50 cm play mat will be reduced to 25 cm by 25 cm in folded state with a thickness of about 1 cm if the combined layers 21, 22, 27, 26, 25 have a thickness of 2 mm.

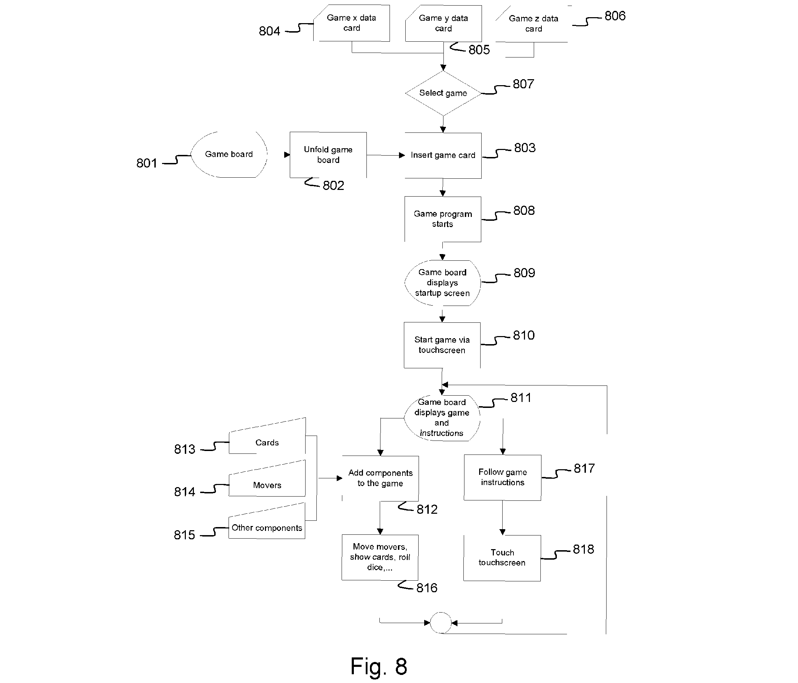

Fig. 8 shows the process of playing games on platform 2. First, game board 801 is unfolded in step 802. Thereafter, in step 803, a game card containing one or more game applications is inserted in the card slot of the game platform. Data card 804 containing game application x, data card 805 containing game application y or data card 806 containing game application z is inserted. In case the inserted data card contains only one game application, the game becomes automatically selected in step 807. In case the inserted data card contains plural game applications, the game platform shall request the players in step 807 to select the game that will be played. Thereupon, in step 808, the game program shall be started and a startup screen shall be displayed in step 809. The players can start the game through interaction with the touch screen, as is indicated by step 810 in Fig. 8. Under control of its processor, the game platform shall display the game board and instructions for the players in step 811. The game shall progress by the players following the instructions in 817 and interacting with the touch screen in 818, or through recognition and or movement of game components in 816. These game components may include cards 813, movers 814 or other dedicated game components 815 that have to be added to the game in step 812.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A platform suitable for playing variable multi-player games, said platform comprising:
- a substrate;
- at least one interface for receiving dedicated game applications;
- a touch display with dimensions adapted to enable plural players to simultaneously view and interact with a displayed game board through finger touch; and
- a processor for monitoring, controlling and guiding progress of a game,
**CHARACTERISED IN THAT**:
- said substrate and touch display are composed of flexible materials; and
- said touch display further comprises a tactile layer for sensing dedicated game components that are associated with a dedicated game application.

2. A platform according to claim 1,
wherein said display comprises printed OLEDs.

3. A platform according to claim 1,
wherein said display comprises electronic ink.

4. A platform according to claim any one of the preceding claims,
wherein said platform has a length of and/or a width of at least 40 cm.

5. A platform according to any one of the preceding claims,
wherein said platform has a length and/or a width of at least 50 cm.

6. A platform according to any one of the preceding claims,
wherein said platform is foldable along folding lines and/or cutting lines.

7. A platform according to claim 6,
wherein said platform is quarterly foldable along two folding lines.

8. A platform according to claim 6,
wherein said platform is quarterly foldable along three folding lines and a cutting line.

9. A platform according to any one of the preceding claims,
wherein said tactile layer for sensing dedicated game components comprises capacitive sensors adapted to sense electrically conductive elements in said dedicated game components.

10. A platform according to any one of the preceding claims,
wherein said substrate comprises a Polyethylene Terephtalate or PET layer.

11. A platform according to any one of the preceding claims,
wherein said substrate comprises cardboard.

12. A platform according to any one of the preceding claims, wherein said processor is configured to be responsive to instructions of a dedicated game application, and adapted to:
- control display of a game board, visuals and game evolution as defined by said dedicated game application; and
- monitor, control and guide progress of a game through interaction with said dedicated game components associated with said dedicated game application and finger touch.

13. A platform according to any one of the preceding claims, wherein said at least one interface comprise a wireless interface.

14. A platform according to claim 13, further comprising a Solid State Drive or SSD for storing said dedicated game applications.

15. A platform according to any one of the preceding claims, wherein said at least one interface comprise one or more of the following:
- an interface for flash memory cards;
- an interface for minidisc;
- a Universal Serial Bus or USB interface.

16. A game for a platform according to any one of the preceding claims, said game comprising a dedicated game application readable from memory or downloadable, and one or more dedicated game components comprising one or more of the following:
- cards;
- pawns;
- dice;
- movers;
- tokens;
- figurines.

17. A game according to claim 16,
wherein said one or more dedicated game components comprise printed electrically conductive elements for identification.

18. A game according to claim 17,
wherein said printed electrically conductive elements comprise electrically conductive ink.

19. A game according to claim 17,
wherein said printed electrically conductive elements comprise a metal film.

## Amended claims

### Amended claims in accordance with Rule 137(2) EPC.

**1.** A platform (2) suitable for playing variable multi-player games, said platform (2) comprising:
- a substrate (25);
- at least one interface for receiving dedicated game applications (6; 9; 12);
- a touch display (22, 27) with dimensions adapted to enable plural players (1) to simultaneously view and interact with a displayed game board (8; 11; 14) through finger touch, said substrate (25) and said touch display (22, 27) being piecewise foldable or composed of flexible materials; and
- a processor for monitoring, controlling and guiding progress of a game,
**CHARACTERISED IN THAT**:
- said touch display (22, 27) further comprises a tactile layer (22) for sensing dedicated game components (7; 10; 13, 15) that are associated with a dedicated game application (6; 9; 12).

**2.** A platform (2) according to claim 1,
wherein said display (22, 27) comprises printed OLEDs.

**3.** A platform (2) according to claim 1,
wherein said display (22, 27) comprises electronic ink.

**4.** A platform (2) according to any one of the preceding claims,
wherein said platform (2) has a length of and/or a width of at least 40 cm.

**5.** A platform (2) according to any one of the preceding claims,
wherein said platform (2) has a length and/or a width of at least 50 cm.

**6.** A platform (2) according to any one of the preceding claims,
wherein said platform (2) is foldable along folding lines and/or cutting lines (23).

**7.** A platform (2) according to claim 6,
wherein said platform (2) is quarterly foldable along two folding lines.

**8.** A platform (2) according to claim 6,
wherein said platform (2) is quarterly foldable along three folding lines and a cutting line (23).

**9.** A platform (2) according to any one of the preceding claims,
wherein said tactile layer (22) for sensing dedicated game components (7; 10; 13, 15) comprises capacitive sensors adapted to sense electrically conductive elements in said dedicated game components (7; 10; 13, 15).

**10.** A platform (2) according to any one of the preceding claims,
wherein said substrate (25) comprises a Polyethylene Terephtalate or PET layer.

**11.** A platform (2) according to any one of the preceding claims,
wherein said substrate (25) comprises cardboard.

**12.** A platform (2) according to any one of the preceding claims, wherein said processor is configured to be responsive to instructions of a dedicated game application (6; 9; 12), and adapted to:
- control display of a game board (8; 11; 14), visuals and game evolution as defined by said dedicated game application (6; 9; 12); and
- monitor, control and guide progress of a game through interaction with said dedicated game components (7; 10; 13, 15) associated with said dedicated game application (6; 9; 12) and finger touch.

**13.** A platform (2) according to any one of the preceding claims, wherein said at least one interface comprise a wireless interface.

**14.** A platform (2) according to claim 13, further comprising a Solid State Drive or SSD for storing said dedicated game applications.

**15.** A platform (2) according to any one of the preceding claims, wherein said at least one interface comprise one or more of the following:
- an interface for flash memory cards (20);
- an interface for minidisc;
- a Universal Serial Bus or USB interface.

**16.** A game for a platform (2) according to any one of the preceding claims, said game comprising a dedicated game application (6; 9; 12) readable from memory or downloadable, and one or more dedicated game components (7; 10; 13, 15) comprising one or more of the following:
- cards (13; 17);
- pawns (16);
- dice (15; 18);
- movers (7; 10);
- tokens;
- figurines.

**17.** A game according to claim 16,
wherein said one or more dedicated game components (7; 10; 13, 15) comprise printed electrically conductive elements for identification.

**18.** A game according to claim 17,
wherein said printed electrically conductive elements comprise electrically conductive ink.

**19.** A game according to claim 17,
wherein said printed electrically conductive elements comprise a metal film.
